**Europäisches Patentamt**

**European Patent Office**

**Office européen des brevets**

(19)

(11) Veröffentlichungsnummer: **0 302 410 B1**

(12) **EUROPÄISCHE PATENTSCHRIFT**

(45) Veröffentlichungstag der Patentschrift: **17.06.92**

(21) Anmeldenummer: **88112362.4**

(22) Anmeldetag: **29.07.88**

(51) Int. Cl.5: **B05B 7/08**, A61M 11/06, A61M 35/00, B05B 7/02

(54) **Sprühkopf zum Applizieren eines Mehrkomponentenmaterials mittels Gas.**

(30) Priorität: **01.08.87 DE 3725553**

(43) Veröffentlichungstag der Anmeldung:
**08.02.89 Patentblatt 89/06**

(45) Bekanntmachung des Hinweises auf die Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**EP-A- 0 037 393**
**EP-A- 0 156 098**
**GB-A- 2 082 686**
**US-A- 4 361 285**

(73) Patentinhaber: **HOECHST AKTIENGESELL-SCHAFT**
**Postfach 80 03 20**
**W-6230 Frankfurt am Main 80(DE)**

(72) Erfinder: **Zimmermann, Josef**
**Auf der Krautweide 11**
**W-6231 Sulzbach/Taunus(DE)**

EP 0 302 410 B1

## Beschreibung

Die Erfindung betrifft einen Sprühkopf zum Applizieren eines Mehrkomponentenmaterials mittels Gas, bei dem Förderkanäle für die einzelnen Komponenten und ein mit einer Gazuführung versehener Gaskanal getrennt voneinander angeordnet sind.

Eine Vorrichtung der eingangs genannten Art ist aus der europäischen Patentschrift 00 37 393 bekannt. Die Spritzenkörper für die Komponenten sind über Konusse mit den Förderkanälen eines Sprühkopfes verbunden. Der Sprühkopf weist einen Zuführkanal für Gas auf, der sich innerhalb des Sprühkopfes in zwei Äste teilt, deren Austrittsöffnungen im Bereich der Mündungen der Förderkanäle angeordnet und im Winkel zueinandergeführt sind und die rechtwinkelig zur Austrittsrichtung der Komponenten gerichtet sind. Die Komponenten, die über die Spritzenkörper (Kolbenpumpen) zugeführt werden, werden durch das durch die Zuführkanäle herangeführte Gas versprüht. Die Sprühkegel vereinigen sich, je nach Größe des Winkels, den die Sprühachsen einschließen, mehr oder weniger entfernt vor den Mündungen der Förderkanäle, wo sie sich mischen, und die Komponenten miteinander reagieren. Nachteilig ist, daß zielsicheres Sprühen mit diesem Sprühkopf nicht möglich ist, denn das zu besprühende Objekt muß genau im Schnittpunkt der Sprühstrahlen liegen, wenn ein befriedigendes Ergebnis erzielt werden soll.

Hier will die Erfindung Abhilfe schaffen. Gemäß der Erfindung, wie sie in den Ansprüchen gekennzeichnet ist, wird die Aufgabe durch einen Sprühkopf gelöst, bei dem der Gaskanal durch einen Trennsteg in mehrere parallel zum Trennsteg verlaufende Kanäle aufgeteilt wird, in die die Förderkanäle münden, der Trennsteg über die Kanalenden hinausragt und der Gaskanal mit einer Gaszuführung versehen ist. Die Förderkanäle können unter einem Winkel $\alpha \leq 90°$ in die parallel zum Trennsteg verlaufenden Kanäle einmünden.

Die mit der Erfindung erreichten Vorteile sind insbesondere darin zu sehen, daß durch das Zusammenführen der Komponenten unmittelbar hinter dem Ende des Trennsteges ein schlanker Sprühkegel entsteht, der ein gleichmäßiges Vermischen der Komponenten und ein zielsicheres Besprühen Sprühdruck ermöglicht. Durch den Trennsteg wird außerdem der vorzeitige Kontakt der unterschiedlichen Komponenten miteinander vermieden, was zu Verstopfungen der Kanäle führen würde.

Der Sprühkopf eignet sich insbesondere zum Applizieren von chirurgischem Gewebeklebstoff, der aus den Komponenten in situ nach Passieren des Trennstegendes gebildet wird.

Im folgenden wird die Erfindung von lediglich einen Ausführungsweg zeigenden Zeichnungen näher erläutert. Es zeigen

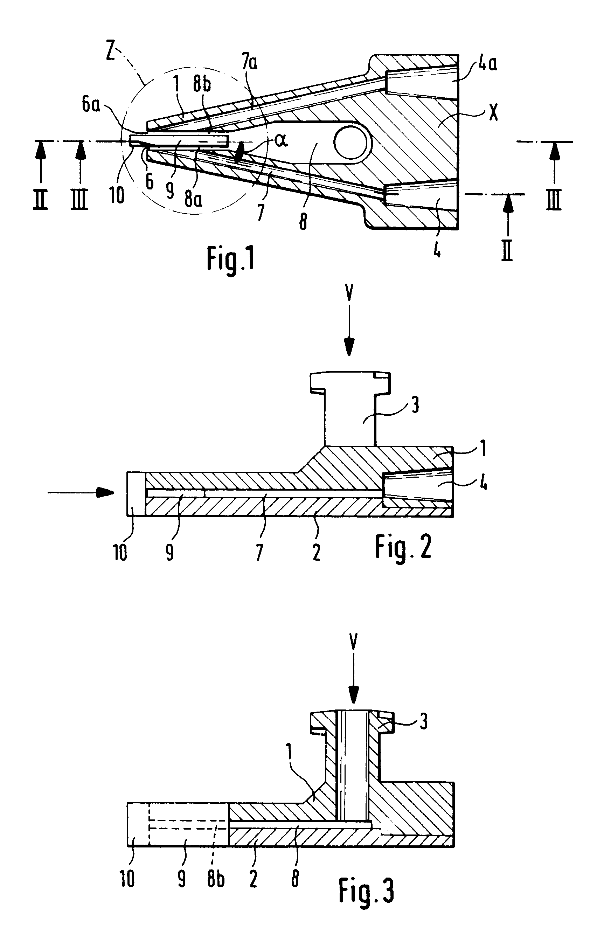

Figur 1 den Sprühkopf in Draufsicht, geschnitten;

Figur 2 den Schnitt II - II der Figur 1;

Figur 3 den Schnitt III - III der Figur 1 und

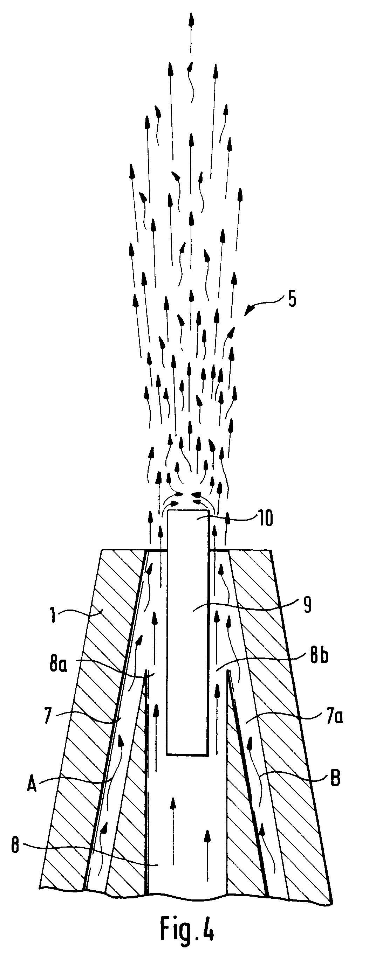

Figur 4 den Ausschnitt "Z" der Figur 1 mit Sprühbild in Draufsicht.

Im Gehäuse 1 des Sprühkopfes sind die Förderkanäle 7 und 7a für die Komponenten des Mehrkomponentenmaterials und der Gaskanal 8 angeordnet. Der Gaskanal wird durch den Trennsteg 9 in parallel zum Trennsteg verlaufende Kanäle 8a, 8b aufgeteilt, in die die Förderkanäle 7, 7a unter einem Winkel $\alpha \leq 90°$ münden. Der Trennsteg 9 ragt über die Kanalenden 6, 6a hinaus. Der Gaskanal 8 ist mit einer Gaszuführung 3 versehen. Die Förderkanäle 7, 7a können mit Innenkonusse 4, 4a zur Aufnahme von Einwegspritzen (nicht dargestellt), die die Komponenten, z.B. Fibrinogenlösung und Thrombinlösung enthalten, versehen sein. Besteht das Mehrkomponentenmaterial aus drei oder mehr Komponenten, kann der Trennsteg 9 im Querschnitt drei - oder vieleckig ausgebildet sein, so daß der Gaskanal entsprechend der Anzahl der Ecken bzw. Komponenten aufgeteilt wird. Das aus dem Sprühkopf herausragende Ende 10 des Trennstegs 9 kann kantig oder abgerundet ausgeführt sein. Die Komponenten A und B werden über die Förderkanäle 7 und 7a den Gaskanälen 8a, 8b zugeführt, vom Gas (Luft) mitgerissen und hinter dem Ende 10 des Trennstegs 9 verwirbelt, so daß sie reagieren können. 5 symbolisiert das Sprühbild und 2 den Gehäusedeckel. Fertigungstechnische Gründe können auch eine andere Anordnung der Förderkanäle und des Gaskanals im Gehäuse 1 notwendig machen.

## Patentansprüche

1. Sprühkopf zum Applizieren eines Mehrkomponentenmaterials mittels Gas, bei dem Förderkanäle (7, 7a) für die einzelen Komponenten und ein mit einer Gaszufürung versehener Gaskanal (8) getrennt voneinander angeordnet sind, dadurch gekennzeichnet, daß der Gaskanal (8) durch einen Trennsteg (9) in mehrere, parallel zum Trennsteg (9) verlaufende Kanäle (8a, 8b) aufgeteilt wird, in die die Förderkanäle (7, 7a) münden und der Trennsteg (9) über die Kanalenden (6, 6a) hinausragt.

2. Sprühkopf nach Anspruch 1, dadurch gekennzeichnet, daß die Förderkanäle (7, 7a) unter einem Winkel $\alpha \leq 90°$ in die parallel zum Trennsteg (9) verlaufenden Kanäle (8a, 8b) einmünden.

## Claims

1. A spray head for the administration of a multi-component material by means of gas, in which delivery channels (7, 7a) for the individual components and a gas channel (8) provided with a gas supply are arranged separately from one another, wherein the gas channel (8) is divided by a separating web (9) into a plurality of channels (8a, 8b) running parallel to the separating web (9), into which channels the delivery channels (7, 7a) open out and the separating web (9) protrudes beyond the channel ends (6, 6a).

2. The spray head as claimed in claim 1, wherein the delivery channels (7, 7a) open out at an angle $\alpha \leq 90°$ into the channels (8a, 8b) running parallel to the separating web (9).

**Revendications**

1. Tête de pulvérisation pour l'application d'un matériau formé de plusieurs constituants, à l'aide d'un gaz, et dans laquelle des canaux d'entraînement (7,7a) pour les différents constituants et un canal (8) d'adduction du gaz, équipé d'une unité d'alimentation en gaz, sont disposés en étant séparés les uns des autres, caractérisée en ce que le canal (8) d'adduction du gaz est subdivisé par une barrette de séparation (9) en plusieurs canaux (8a,8b) qui sont parallèles à la barrette de séparation (9) et dans lesquels débouchent les canaux d'entraînement (7,7a), et que la barrette de séparation (9) fait saillie au-delà des extrémités (6,6a) des canaux.

2. Tête de pulvérisation selon la revendication 1, caractérisée en ce que les canaux d'entraînement (7,7a) débouchent, sous un angle $\alpha \leq 90°$, dans les canaux (8a,8b) parallèles à la barrette de séparation (9).

Fig.1

Fig. 2

Fig. 3

Fig.4